Europäisches Patentamt

European Patent Office

Office européen des brevets

(11) Publication number: **0 030 819**
**A1**

## (12) EUROPEAN PATENT APPLICATION

(21) Application number: **80304361.1**

(22) Date of filing: **03.12.80**

(51) Int. Cl.³: **C 03 C 3/08**
**C 03 C 3/22, C 03 C 3/30**

(30) Priority: **13.12.79 US 103334**

(43) Date of publication of application:
**24.06.81 Bulletin 81/25**

(84) Designated Contracting States:
**BE DE FR GB IT NL**

(71) Applicant: **ANCHOR HOCKING CORPORATION**
**109 North Broad Street**
**Lancaster Ohio 43130(US)**

(72) Inventor: **Deeg, Emil W.**
**5800 Coonpath Road, N.W.**
**Carroll Ohio 43112(US)**

(72) Inventor: **Kumar, Binod**
**3328 Meadowbrook Drive**
**Lancaster Ohio 43130(US)**

(74) Representative: **Bowman, Paul Alan et al,**
**LLOYD WISE, TREGEAR & CO. Norman House 105-109**
**Strand**
**London WC2R OAE(GB)**

(54) Spontaneously opacifying glass compositions with low volume relaxation.

(57) Spontaneous opal glass compositions of the fluoride opacified soda-boro-aluminosilicate type which display a low volume relaxation together with good opacity, resistance to development of surface slipperiness and odour under humid conditions, and low batch cost, the glass compositions comprising:

| | |
|---|---|
| $SiO_2$ | 70 to 74% by weight |
| $Na_2O$ | 10.0 to 13.0 % by weight |
| $Al_2O_3$ | 7.0 to 8.5 % by weight |
| F | 4.3 to 5.0 % by weight |
| $B_2O_3$ | 1.0 to 2.5 % by weight |
| BaO | 0.5 to 2.0 % by weight |
| CaO | 0.2 to 0.7 % by weight |
| $Li_2O$ | 0.2 to 0.6 % by weight |
| $K_2O$ | 0 to 0.3 % by weight |

said components constituting at least 99.5% of the composition, the balance, if any, comprising fining agents and/or colourants. By reason of the unusual thermal expansion characteristics of this glass, it can be formed into articles and decorated by economical mass production techniques, with a low breakage rate even if poorly annealed.

EP 0 030 819 A1

SPONTANEOUSLY OPACIFYING GLASS COMPOSITIONS
WITH LOW VOLUME RELAXATION

This invention relates to spontaneous opal glass, that is, glass compositions which develop opacity during regular cooling or ware formed from them.

It is known that introduction of cryolite ($Na_3AlF_6$) into glass batches tends to promote the formation of white opaque glasses, which have become known as opal glasses. Their opacity is caused by small fluorine-containing crystals or phase-separated droplets in the glassy matrix, which cause scattering of a substantial portion of the incident light.

Opal glasses are commonly classified into two categories: (a) thermally opacifiable glasses, and (b) spontaneous opals. Category (a) includes compositions which develop little or no opacity during regular cooling of articles formed from them and which require additional heat treating, normally near or somewhat above the annealing point of the glass, to develop light scattering centres of sufficient size and concentration for opacity. Because of the additional heat treatment required for opacification, the thermally opacifiable glasses are not widely used for modern mass production of tableware items and the like.

The spontaneous opal glasses are generally considered to be more attractive for mass production of opal glass tableware and floral items. Opals of this type develop opacity during the regular production-determined cooling of the formed ware. British Patent Specification No. 1 493 456 discloses spontaneous opal of the fluoride opacified soda-boro-alumino-silicate type which comprises 70 to 80% by weight of $SiO_2$, 3 to 11% by weight of $Al_2O_3$, 0.3 to 1.2% by weight of $Li_2O$, 6 to 11.7% by weight $Na_2O$ or $Na_2O + K_2O$, and 3 to 4.5% by weight of F, with a total weight of alkali metal oxides being less than 12%, and the balance, if any, consisting of other compatible constituents.

Certain properties are especially relevant for an opal glass which is to be used in the manufacture of tableware or floral items. The glass must of course display adequate opacity and whiteness. It also should have good chemical durability, and in particular should not display the superficial surface "slipperiness" that occurs with some opals under storage at room temperature at a relative humidity of 70% or more. Further, the glass must be free of the unpleasant odour that sometimes occurs with humid storage. Also, the cost of the composition should be acceptably low for volume marketing.

In an effort to improve upon previous opals in these respects, a fluoride opacified soda-boro-alumino-silicate opal composition, consisting of 72.3% by weight of $SiO_2$, 1.3% by weight $B_2O_3$, 8.6% by weight $Al_2O_3$, 1.4% by weight $Li_2O$, 10.4% by weight $Na_2O$, 0.3% by weight $K_2O$, 0.4% by weight CaO, 0.9% by weight BaO, and 4.4% by weight F, on an as analysed basis was prepared. In initial test melts that glass displayed apparently good qualities, particularly in respect to viscosity, opacity, odour and slipperiness (surface durability). Surprisingly, however, during a larger (pilot scale) test of that composition using continuous melting, forming and annealing techniques, almost 100% of the ware broke during a subsequent decorating step in which an enamel was applied, then fired on and tempered or "quenched" in air.

The breakage was found to originate at the interface between the glass and the applied enamel decoration. The frequency of breakage could be reduced by using slower, more careful annealing and by utilizing special care in decorating. However, the required extra care would add undesirable expense to the commercial manufacture of glass items from that composition. Because of the otherwise quite desirable qualities of the composition, the reason for the breakage was investigated.

Initially it was believed that the breakage was caused by a glass/enamel expansion mismatch. However, further study indicated that the breakage was related to the thermal expansion behaviour of the glass during the temperature changes that were incidental to the high speed production techniques employed.

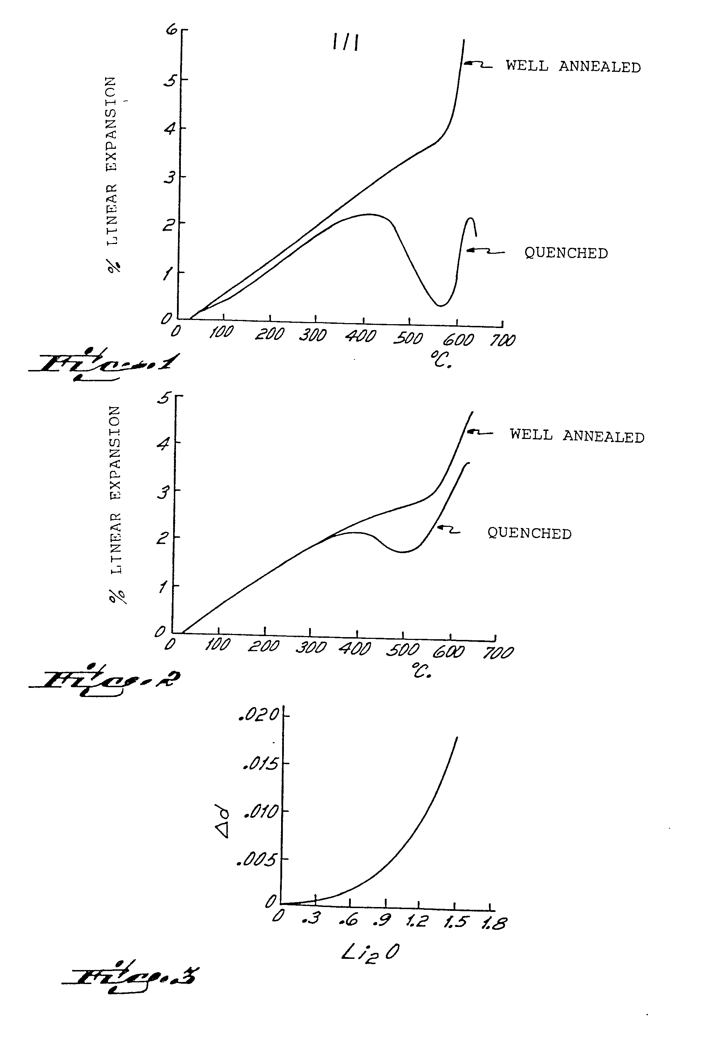

More specifically, it was found that the thermal expansion characteristics of that particular opal composition were dependent on the rate at which the ware was cooled. A well annealed (i.e. gradually cooled) article formed of that composition had a coefficient of linear expansion of $76 \times 10^{-7}/^{\circ}C$ over the 25 to $300^{\circ}C$ range; but a poorly annealed sample of the same glass had a lower coefficient, of only $65 \times 10^{-7}/^{\circ}C$. Moreover, at higher temperatures between 400 to 550°C, the glass exhibited a large contraction. This is illustrated graphically in Figure 1 of the accompanying drawings, which shows the different percentage expansions of ware of that composition, as a function of temperature, for both well annealed samples and for quenched (i.e. poorly annealed) samples. Ware produced from such a glass under high speed manufacturing conditions typically would be annealed differently in different parts of the article, and thus a given article of such are would present different coefficients of expansion in different portions of the glass body, with lower values at the outside than at the inside. Quenching enhances such differences.

By itself, the different expansions would presumably be beneficial, because the lower expansion of the quickly cooled outside of the article would tend to establish compression in the article's surface and thus increase ultimate strength. However, as already noted, the expansion difference is coupled with an unusually high degree of contraction upon further heating of a poorly annealed sample. This shrinkage effect is referred to as "volume relaxation", because it reflects an irreversible reduction or "relaxation" in the specific volume (the volume occupied by a unit weight) upon heating of the glass.

This second effect offsets and overrides the first. Upon heating such an article to, for example, 575°C, the poorer annealed surface glass would tend to shrink to a greater degree than the better annealed core of the article, thus producing tension in the surface. The tension, in turn, tends to cause fracture if it exceeds a level of about 700 kg/cm$^2$. It had not previously been recognised that this effect could have such a marked effect on the practicality of high speed production.

Although the volume relaxation phenomenon was apparently the cause of the breakage, it was not clear what led to the volume relaxation in the first place. It is an unusual property and, does not seem to have previously been observed in opals. This particular composition behaved "normally", like other opals, if the ware was formed with slow and uniform cooling, i.e. not exposed to rapid or differential cooling. The high breakage occurred only a high speed, high volume production conditions.

In an effort to overcome the high incidence of breakage caused by volume relaxation while at the same time retaining the desirable blend of other important qualities, many different opal compositions have been tested. The change in specific volume of each composition was measured as a function of the duration of the heat treatment to which the ware was exposed. As a mathematical criterion for measurement of the volume relaxation, the difference in densities at different temperatures was adopted: $\Delta d = d_{T_1} - d_{T_2}$, in which $T_1$ is a temperature about $100^{\circ}C$ above the glass transformation point, and $T_2$ is a temperature within the glass transformation range. (Density, the reciprocal of specific volume, was used rather than specific volume because density is used more frequently in the art). While this difference varies with the temperature at which the measurements are taken, it affords at least a relative indication of the magnitude of this factor. The $\Delta d$ difference was measured in the higher temperature region in which the sharp contraction occurred. $\Delta d$ is expressed herein in $g/cm^3$.

As a means of quantifying this and the other product qualities, an "integral feasibility value" has been established. The characteristics of opals formed from different compositions were rated by assigning to each characteristic an integer rating from 0 to 3, with 0 denoting unacceptable, 1 poor, 2 fair, and 3 good. These ratings were applied to opacity, as determined by visual examination under white fluorescent lighting; to unpleasant odour as determined subjectively by several observers; and to "craze" as evaluated by a standardised test involving repeated dishwashings followed by exposure to an oven at about 300°C. (The craze characteristic correlates with slipperiness.) Batch cost was rated according to cost in dollars per ton, a 0 rating corresponding to an (unacceptable) cost above $150 per ton; 1 corresponding to a cost of $125 to 150; 2 to a cost between $100 to 125; and 3 to a cost less than $100 per ton. Finally, volume relaxation was quantified with a numerical rating of 0 corresponding to a $(\Delta d) \times 10^{+4}$ value greater than 50, taken over the temperature interval $T_2 = 566°C$ to $T_1 = 649°C$; 1 corresponding to a value of 30 to 50; 2 corresponding to a value between 10 and 30; and a numerical ranking of 3 corresponding to a value of 0 to 10. The integral ratings assigned to each of these five critical properties were then multiplied with each other and the product elevated to the 1/5 power to obtain "the integral feasibility rank" which is in effect the geometrical means of the five individual numerical values. This procedure immediately eliminates glasses which are unacceptable ("0") in respect to any one or more characteristics. Feasibility values greater than 0 correlate to qualitative statements of "poor" (1), "fair" (2), or "good" (3).

Table I shows the compositions of the glasses tested, as calculated from the batch ingredients. Table II shows the volume relaxation of the respective compositions, their rates as to various characteristics, and the overall integral feasibility of each composition.

Table I

| Component | Composition | | | | | | |
|---|---|---|---|---|---|---|---|
| | A | B | C | D | E | F | G |
| $SiO_2$ | 72.83 | 74.04 | 72.00 | 72.33 | 72.33 | 72.33 | 72.33 |
| $Na_2O$ | 13.16 | 11.40 | 11.70 | 10.92 | 12.37 | 11.50 | 11.21 |
| $Al_2O_3$ | 8.30 | 7.40 | 7.63 | 8.35 | 8.35 | 8.35 | 8.35 |
| F | 3.50 | 3.70 | 4.17 | 4.34 | 4.34 | 4.34 | 4.34 |
| $B_2O_3$ | - | - | 2.37 | 1.23 | 1.23 | 1.23 | 1.23 |
| BaO | 1.80 | 1.75 | 2.10 | 0.90 | 0.90 | 0.90 | 0.90 |
| CaO | 0.41 | 0.46 | - | 0.47 | 0.47 | 0.47 | 0.47 |
| $Li_2O$ | - | - | - | 1.45 | - | 0.87 | 1.16 |
| $K_2O$ | - | 1.25 | - | - | - | - | - |
| Cl | | | | | | | |
| $As_2O_3$ | | | | | | | |

= 8 =

Table I Continued

| Component | Composition | | | | | | |
|---|---|---|---|---|---|---|---|
| | H | I | J | K | L | M | N |
| $SiO_2$ | 72.69 | 72.69 | 73.09 | 72.30 | 74.4 | 75.0 | 76.7 |
| $Na_2O$ | 8.44 | 9.33 | 10.78 | 10.43 | 9.0 | 10.4 | 9.5 |
| $Al_2O_3$ | 8.68 | 8.68 | 7.68 | 8.60 | 7.1 | 7.8 | 8.4 |
| F | 4.55 | 4.55 | 4.80 | 4.38 | 3.0 | 3.8 | 4.0 |
| $B_2O_3$ | 1.84 | 1.84 | 1.92 | 1.28 | 3.5 | 1.8 | 0.1 |
| BaO | 0.87 | 0.87 | 1.29 | 0.90 | – | – | – |
| CaO | 0.42 | 0.42 | 0.44 | 0.42 | – | – | – |
| $Li_2O$ | 0.73 | 0.73 | – | 1.41 | 1.2 | 0.6 | 0.6 |
| $K_2O$ | 1.78 | 0.89 | – | 0.28 | 0.6 | 0.6 | 0.7 |
| Cl | | | | | 1.0 | | |
| $As_2O_3$ | | | | | 0.2 | | |

=9=

Table II

| Characteristic | Composition | | | | | | | |
|---|---|---|---|---|---|---|---|---|
| | A | B | C | D | E | F | G | H |
| Opacity | 3 | 3 | 2 | 3 | 1 | 3 | 3 | 2 |
| Odour | 0 | 0 | 1 | 2 | 1 | 2 | 3 | 0 |
| Craze | 0 | 0 | 0 | 2 | 1 | 2 | 3 | 1 |
| Vol. Relaxation | 3 | 3 | 3 | 0 | 3 | 1 | 0 | 0 |
| Batch cost | 3 | 3 | 3 | 0 | 3 | 1 | 0 | 1 |
| Integral feasibility | 0 | 0 | 0 | 0 | 1.5 | 1.6 | 0 | 0 |
| Actual volume relax. $\triangle$ d, $\times 10^{+4}$ | 6 | 2 | 6 | 153 | 7 | 44 | 74 | 59 |

Table II Continued

| Characteristic | Composition | | | | | |
|---|---|---|---|---|---|---|
| | I | J | K | L | M | N |
| Opacity | 2 | 1 | 3 | 3 | 3 | 3 |
| Odour | 0 | 1 | 3 | 2 | 2 | 2 |
| Craze | 1 | 1 | 3 | 3 | 3 | 0 |
| Vol. Relaxation | 0 | 3 | 0 | 0 | 0 | 0 |
| Batch cost | 1 | 3 | 0 | ND | ND | ND |
| Integral feasibility | 0 | 1.5 | 0 | 0 | 0 | 0 |
| Actual volume relax. $\triangle$ d, x $10^{+4}$ | 64 | 5 | 255 | 71 | 66 | 115 |

=11=

From Table II it can be seen that volume relaxation varied greatly, over a range from 2 to as high as 255. It is further apparent that even those compositions having low relaxation did not necessarily have adequate qualities in other respects. For example, compositions A and B, with desirably low ($\Delta$ d) x $10^{+4}$ values of 6 and 2, respectively, were unacceptable as to craze and odour; and composition E, with a $\Delta$ d of 7 x $10^{-4}$, was rated poor as to opacity in addition to odour and craze. Thus, it appeared that improvements in volume relaxation property were usually accompanied by detrimental changes in other qualities.

Compositions L, M and N of Tables I and II correspond to Examples 6, 14 and 16 of British Patent Specification No. 1 493 456. All displayed very high relaxations, although they were good in other respects, they would not be suitable for processing involving poor annealing or rapid cooling.

The present invention provides for a spontaneous opal glass which combines a desirably low volume relaxation with good opacity, resistance to development of surface crazing and odour in humid storage and low batch cost, the composition comprising:

| | |
|---|---|
| $SiO_2$ | 70 to 74% by weight |
| $Na_2O$ | 10.0 to 13.0% by weight |
| $Al_2O_3$ | 7.0 to 8.5% by weight |
| F | 4.3 to 5.0% by weight |
| $B_2O_3$ | 1.0 to 2.5% by weight |
| BaO | 0.5 to 2.0% by weight |
| CaO | 0.2 to 0.7% by weight |
| $Li_2O$ | 0.2 to 0.6% by weight |
| $K_2O$ | 0 to 0.3% by weight |

The balance of the composition, if any, and typically less than 0.5%, may comprise small amounts of fining agents such as $As_2O_3$, $Sb_2O_3$ and $CeO_2$ and/or conventional colour agents such as the transition metal oxides.

Table III illustrates specific examples of spontaneous opal glass-forming compositions in accordance with the parameters of the invention. The compositions set forth are calculated from the batch, making due allowance for volatilisation losses of the alkali oxides, $B_2O_3$ and F. The analysed compositions are substantially similar.

Table III

| Component | Range of the invention | Composition | | | |
|---|---|---|---|---|---|
| | | 1 | 2 | 3 | 4 |
| $SiO_2$ (% by weight) | 70 to 74 | 72.33 | 73.09 | 73.09 | 72.33 |
| $Na_2O$ (% by weight) | 10.0 to 13.0 | 11.79 | 10.39 | 10.09 | 12.08 |
| $Al_2O_3$ (% by weight) | 7.0 to 8.5 | 8.35 | 7.68 | 7.68 | 8.35 |
| F (% by weight) | 4.3 to 5.0 | 4.34 | 4.80 | 4.80 | 4.34 |
| $B_2O_3$ (% by weight) | 1.0 to 2.5 | 1.23 | 1.92 | 1.92 | 1.23 |
| BaO (% by weight) | 0.5 to 2.0 | 0.90 | 1.29 | 1.29 | 0.90 |
| CaO (% by weight) | 0.2 to 0.7 | 0.47 | 0.44 | 0.44 | 0.47 |
| $Li_2O$ (% by weight) | 0.2 to 0.6 | 0.58 | 0.39 | 0.39 | 0.29 |
| $K_2O$ (% by weight) | 0 to 0.3 | — | — | 0.30 | — |
| | | 99.99 | 100.00 | 100.00 | 99.99 |

Table IV shows the feasibility ratings of the compositions of Table III, and the actual volume relaxations. As can be seen, compositions of the invention display low volume relaxations, with $\Delta$ d in the range of 0 to 10 x $10^{-4}$. They also have relatively good properties in respect to the other relevant criteria of opacity, odour, craze and batch cost. As indicated by the fact that its integral feasibility number is the highest of the group, composition 3 is presently preferred.

Table IV

| Characteristic | Composition | | | |
| --- | --- | --- | --- | --- |
| | 1 | 2 | 3 | 4 |
| Opacity | 2 | 3 | 3 | 2 |
| Odour | 2 | 3 | 3 | 2 |
| Craze | 2 | 3 | 3 | 1 |
| Volume relaxation | 2 | 3 | 3 | 3 |
| Batch cost | 1 | 1 | 2 | 2 |
| Integral feasibility value | 1.7 | 2.4 | 2.8 | 1.9 |
| Volume relaxation $\Delta$ d x $10^{+4}$ | 5 | 4 | 3 | 3 |

Figure 2 of the accompanying drawings shows the percent linear expansion of composition 3 with increasing temperature, for both well annealed and quenched (poorly annealed) samples. In contrast to Figure 1, it can be seen that, up to about 330°C the expansion of composition 3 of the invention is the same regardless of how the sample was cooled; whereas even at that lower range the initial (breakage-prone) composition of Figure 1 displays a lower expansion if quenched that if well annealed. Further comparison of the two Figures also shows that at higher temperatures the initial breakage-prone composition displayed a large contraction, whereas the composition of the invention had a much smaller contraction. The practical importance of these differences is shown by the fact that the compositions of the invention can be produced by high speed production processes (including tempering, annealing and decorating) with rapid or uneven temperature changes, with an acceptably low breakage rate, whereas the initial composition could not be and required slower and more expensive processing.

The change of specific volume as a function of the duration of heat treatment at temperatures within the closed interval 454 to 649°C was measured. To simulate structural conditions typical of poorly annealed glass, the samples were prepared by quenching a cube approximately 0.25 cm$^3$ from 649 to 30°C. The experimental data can be represented by the analytical expression:

$$\frac{1}{d(t)} = v(t) = v + v_{O_1} \cdot e^{-\eta_1 t} + v_{O_2} \cdot e^{-\eta_2 t}$$

where

$$d(t) = \text{density at time } t,$$
$$v(t) = \text{specific volume at time } t,$$
$$t = \text{duration of heat treatment,}$$
$$\eta_i = \text{relaxation frequency for model component } i,$$
$$v_{0_i} = \text{amplitude of relaxation for model component } i.$$

Calculation of the activation energies of the relaxation frequencies according to Arrhenius' equation has led us to suspect that the major contributors to the previously disregarded but critical property of volume relaxation are network modifying ions. Our tests have established that $Li^+$ is the most significant single factor; in a given composition, the volume relaxation increases sharply with small increases in $Li_2O$ concentration. This is shown in Figure 3 of the accompanying drawings. As can be seen, an increase in $Li_2O$ concentration from 0.6 even to 0.9% by weight (with $Na_2O$ concentration reduced correspondingly and other components remaining constant) causes almost 9-fold increase in $\Delta d$, from 5 to 44 x $10^{-4}$.

Comparison of the characteristics of compositions of the invention shown in Table IV, with those of compositions outside of the invention (Table II) shows that outside the component ranges of the invention, one or more bf these relevant properties tend to fall off rather quickly.

In the compositions of the invention the inclusion of BaO, CaO, $Li_2O$ and $K_2O$ in the specified ranges have important effects. The soda-boro-aluminosilicate base glass provides a chemically durable composition suitable for mass production of tableware and floral items. The $Li_2O$ is necessary to provide sufficient whiteness and opacity of the glass. The amount of fluorine must be at least 4.3% to achieve the desired degree of opacity, but amounts greater than 5% are undesirable. Concentrations of $K_2O$ greater than 0.3% by weight lead to formation of a slippery surface layer. Calcium oxide in amounts up to 0.5% by weight improves the chemical durability of the glass, but larger amounts are found to reduce the degree of whiteness. The BaO increases the index of refraction of the glass matrix and leads to better whiteness, but also increases batch cost.

Concentrations of $Li_2O$ in excess of 0.6% will at elevated temperatures cause large volume relaxation in articles made from glass as shown in Figure 3, which in turn leads to excessive breakage during forming and necessitates uneconomically slow annealing and special care in operations such as tempering and decorating.

The importance of $Li_2O$ concentration is apparent from composition D which, except for its higher proportions of $Li_2O$, otherwise corresponds to the range of this invention. The large amount of $Li_2O$ is apparently responsible for the very high volume relaxation ($153 \times 10^{-4}$), as well as the unacceptable batch cost rating. The effect of insufficient $Li_2O$ is shown by composition E, which has a good volume relaxation but poor opacity and durability. Composition C, in which the amounts of CaO and $Li_2O$ are both lower than required in accordance with the invention, was unacceptable and had poor chemical durability, indicated by its low ratings in respect to odour and craze. Composition H shows the poor odour and craze resulting from high $K_2O$.

We have thus discovered a spontaneous opal glass compositional area in which desirable qualities of opacity, odour, craze and low cost are present in combination with low volume relaxation, whereby glass articles can be formed with an acceptably low breakage rate, by high speed manufacturing processes, even through such processing involves uneven or rapid temperature changes.

CLAIMS:

1.    A spontaneously opacifying glass having a volume relaxation $\Delta$ d in the range of 0 to $10 \times 10^{-4}$ g/cm$^3$, having a composition comprising:

| | |
|---|---|
| SiO$_2$ | 70 to 74% by weight |
| Na$_2$O | 10.0 to 13.0% by weight |
| Al$_2$O$_3$ | 7.0 to 8.5% by weight |
| F | 4.3 to 5.0% by weight |
| B$_2$O$_3$ | 1.0 to 2.5% by weight |
| BaO | 0.5 to 2.0% by weight |
| CaO | 0.2 to 0.7% by weight |
| Li$_2$O | 0.2 to 0.6% by weight |
| K$_2$O | 0 to 0.3% by weight |

said components constituting at least 99.5% of the composition, the balance, if any, comprising fining agents and/or colourants.

2.    A glass as claimed in Claim 1 having the composition:

| | |
|---|---|
| SiO$_2$ | 73.1% by weight |
| Na$_2$O | 10.1% by weight |
| Al$_2$O$_3$ | 7.7% by weight |
| F | 4.8% by weight |
| B$_2$O$_3$ | 1.9% by weight |
| BaO | 1.3% by weight |
| CaO | 0.4% by weight |
| Li$_2$O | 0.4% by weight |
| K$_2$O | 0.3% by weight. |

Fig. 1

Fig. 2

Fig. 3

0030819

European Patent Office

**EUROPEAN SEARCH REPORT**

Application number

EP 80 30 4361

| DOCUMENTS CONSIDERED TO BE RELEVANT | | | CLASSIFICATION OF THE APPLICATION (Int Cl³) |
|---|---|---|---|
| Category | Citation of document with indication, where appropriate, of relevant passages | Relevant to claim | |
| D | GB - A - 1 493 456 (CORNING) <br> * claims 1,2,4 and 7; page 4, lines 66-67 * <br> -- <br> FR - A - 2 082 954 (CORNING) <br> * claim 1; page 6, lines 9-20 * <br> -- <br> US - A - 2 921 860 (S.D. STOOKEY) <br> * claim 7 * <br><br> ------ | 1 <br><br><br> 1 <br><br><br> 1 | C 03 C 3/08 <br> 3/22 <br> 3/30 |
| | | | TECHNICAL FIELDS SEARCHED (Int Cl³) |
| | | | C 03 C 3/08 <br> 3/10 <br> 3/22 <br> 3/30 <br> 1/04 |
| | | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |
| | The present search report has been drawn up for all claims | | |
| Place of search <br> The Hague | Date of completion of the search <br> 13.03.1981 | Examiner <br> GAJ | |

EPO Form 1503.1 06.78